**Europäisches Patentamt**

**European Patent Office**

**Office européen des brevets**

(19)

(11) Veröffentlichungsnummer: **0 233 380**
**B1**

(12) **EUROPÄISCHE PATENTSCHRIFT**

(45) Veröffentlichungstag der Patentschrift:
**11.04.90**

(51) Int. Cl.⁴: **G11B 7/08,** G11B 7/09

(21) Anmeldenummer: **86201317.4**

(22) Anmeldetag: **24.07.86**

(54) **Optische Abtasteinheit.**

(30) Priorität: **27.01.86 NL 8600168**

(43) Veröffentlichungstag der Anmeldung:
**26.08.87 Patentblatt 87/35**

(45) Bekanntmachung des Hinweises auf die Patenterteilung:
**11.04.90 Patentblatt 90/15**

(84) Benannte Vertragsstaaten:
**DE FR GB NL**

(56) Entgegenhaltungen:
**EP-A- 0 215 498**
**DE-C- 818 220**
**FR-A- 427 666**
**FR-A- 2 521 377**
**US-A- 3 126 501**
**US-A- 4 555 780**

**PATENT ABSTRACTS OF JAPAN, Band 5,**
**Nr. 161 (P-84)[833], 16. Oktober 1981; &**
**JP-A-56 90 435 (UNIVERSAL PAIONIA K.K.) 22.07.1981**
**PATENT ABSTRACTS OF JAPAN, Band 6,**
**Nr. 125 (P-127)[1003], 10. Juli 1982; &**
**JP-A-57 50 333 (NIPPON VICTOR K.K.) 24.03.1982**
**PATENT ABSTRACTS OF JAPAN, Band 9,**
**Nr. 308 (P-410)[2031], 4. Dezember 1985; &**
**JP-A-60 138 744 (TOSHIBA K.K.)23.07.1985**

(73) Patentinhaber: **N.V. Philips' Gloeilampenfabrieken,**
**Groenewoudseweg 1, NL-5621 BA Eindhoven(NL)**

(72) Erfinder: **van Sluys, Robert N. J., p/a INT.**
**OCTROOIBUREAU B.V. Prof. Holstlaan 6, NL-5656 AA**
**Eindhoven(NL)**

(74) Vertreter: **Schrijnemaekers, Hubert Joannes Maria et al,**
**Internationaal Octrooibureau B.V. Prof. Holstlaan 6,**
**NL-5656 AA Eindhoven(NL)**

ACTORUM AG

## Beschreibung

Die Erfindung bezieht sich auf eine optische Abtasteinheit zum Steuern und Ausrichten eines Strahlungsbündels auf Aufzeichnungsspuren einer abzutastenden Oberfläche eines Informationsträgers, wobei diese Abtasteinheit ein Objektiv, ein Positions- und Lagendetektionssystem zum Detektieren der Positionen des Objektivs und eine elektromagnetische Antriebsanordnung zum Korrigieren der Position und des Standes des Objektivs gegenüber dem Informationsträger abhängig von den von dem Positions- und Lagendetektionssystem gelieferten elektrischen Fehlersignalen aufweist, wobei die Antriebsanordnung eine bewegliche Objectivhalterung mit einem zylinderförmigen axial magnetisierten Magnetkörper aufweist, der an den axialen Enden mit Magnetpolen versehen ist und wobei die Antriebsanordnung weiterhin mindestens drei in dem Magnetfeld des Magnetkörpers befindliche Segmentspulensysteme aufweist, wobei diese Systeme in der Umfangsrichtung des Magnetkörpers gesehen nebeneinander angeordnet sind und über einen Luftspalt mit dem Magnetkörper magnetisch zusammenarbeiten.

Eine derartige optische Abtasteinheit ist aus der deutschen Patentschrift 32 34 288 bekannt. Bei dieser axialen Abtasteinheit ist das Objektiv in einer beweglichen, axial dauermagnetisierten Hülse mit zwei als magnetische Pole ausgebildeten axialen Enden befestigt. Die ortsfest angeordneten Segmentspulen sind als flache bananenförmig gekrümmte Spulen ausgebildet mit zwei gegenüber der genannten Hülse koaxial sich erstreckenden Spulenteilen, wobei bei Stromdurchgang durch die Segmentspulen der Strom in den jeweiligen Spulenteilen in entgegensetzter Richtung fließt. Mit der bekannten Anordnung der Segmentspulen können drei entsprechend den drei Koordinatenachsen eines orthogonalen Achsensystems gerichtete Kräfte sowie zwei um zwei der genannten Koordinatenachsen wirkende Drehmomente erzeugt werden.

Mit Hilfe der Antriebsanordnung der bekannten Abtasteinheit sind im Grunde alle gewünschten Bewegungen des Objektivs verwirklichbar. Diese Bewegungen umfassen eine axiale Bewegung, die parallel zu der optischen Achse des Objektivs gerichtet ist und dazu dient, ein Lichtbündel in einer Informationsebene einer sich drehenden optischen Platte zu einem Lichtflecken zu fokussieren, und zwei senkrecht aufeinander stehende geradlinige Bewegungen und/oder zwei Kippbewegungen um zwei senkrecht aufeinander stehende und auf die optische Achse ausgerichtete Achsen. Die genannten geradlinigen und Kippbewegungen dienen zur radialen und tangentiellen Spurfolge des Lichtfleckens, während die Kippbewegungen zugleich dazu verwendet werden, eine etwaige Schieflage der Platte zu korrigieren.

Das genannte Positions- und Lagendetektionssystem dient dazu, die Segmentspulen derart anzusteuern, daß in der Betriebslage der Abtasteinheit das Objektiv in eine einwandfreie Position und Lage innerhalb des durch die gesamten Systeme von Segmentspulen gebildeten Raumes gebracht und darin schwebend gehalten wird. Ein derartiges System ist z.B. aus der US Patentschrift 4.425.043 bekannt und ist auch z.B. in der niederländischen Patentanmeldung 8501665 beschrieben.

Die von dem Positions- und Lagendetektionssystem herrührenden einzelnen Detektionssignale werden über eine elektronische Schaltung zu Fehlersignalen für die geradlinigen und Drehbewegungen des Objektivs verarbeitet.

Diese Signale werden zu Regelsignalen umgewandelt und in der Abtasteinheit zum Ansteuern der Segmentspulen der Antriebseinheit verwendet. Dazu ist jede Segmentspule mit einem einzelnen Verstärker gekoppelt, der das für die betreffende Segmentspule beabsichtigte Signal zu einem geeigneten Wert auf einwandfreie Weise verstärkt.

Damit wird erreicht, daß im Betrieb der Abtasteinheit immer eine derartige Regelung durchgeführt wird, daß das Objektiv die richtige Position und Lage innerhalb der Abtasteinheit einnimmt.

Die bekannte Antriebseinheit weist jedoch den Nachteil auf, daß die magnetischen Kräfte zwischen den Segmentspulen und der magnetischen Hülse als Funktion der axialen Verschiebung des Objektivs derart schwanken, daß bereits bei einer geringfügigen axialen Verschiebung des Objektivs aus der mitten zwischen den Spulen liegenden Mittenposition die Antriebsanordnung nicht mehr imstande ist, das Objektiv noch einwandfrei zu verschieben um die erforderliche Fokussierung des Lichtbündels sowie die erforderliche Spurfolge des Lichtfleckens zu verwirklichen. Die in axialer Richtung weit auseinander angeordneten Segmentspulen eignen sich zwar dazu, das Objektiv über einen ausreichend großen Abstand längs der optischen Achse zu bewegen, aber dabei nimmt die Möglichkeit, die übrigen genannten Bewegungen zu erzeugen so schnell ab, daß das Objektiv bereits in einem geringen Abstand von der Mittenposition nicht mehr in ausreichendem Maße angetrieben wird, um die Spurfolge des Lichtfleckens gewährleisten zu können.

Die Erfindung hat nun zur Aufgabe, die optische Abtasteinheit der eingangs beschriebenen Art derart zu verbessern, daß durch eine richtige Anzahl Segmentspulen, eine genaue Positionierung der Segmentspulen und weiterhin durch eine wirtschaftliche gegenseitige elektrische Kopplung der Segmentspulen auf einfache Weise erreicht wird, daß die magnetischen Kräfte, die für die Fokussierbewegung notwendig sind, sowie die magnetischen Kräfte, die für die Spurfolge notwendig sind, konstant oder nahezu konstant bleiben, wenn das Objekt über einen relativ großen axialen Abstand verschoben wird.

Die optische Abtasteinheit weist dazu das Kennzeichen auf, daß die Segmentspulensysteme aus je zwei Randspulen, die sich je im wesentlichen in dem Magnetfeld in der Nähe eines der axialen Enden des genannten Magnetkörpers befinden, sowie aus mindestens einer zwischen den Randspulen angeordneten Mittenspule bestehen und wobei jedes Segmentspulsystem nur über zwei Verstärker mit einer Matrixschaltung verbunden ist, wobei von jedem Segmentspulensystem eines der Enden einer der Randspulen sowie eines der Enden der Mittenspule an den Ausgang eines ersten Verstärkers elektrisch angeschlossen sind, eines der Enden der anderen Randspule sowie das andere Ende der Mittenspule an den Ausgang eines zweiten Verstärkers elektrisch angeschlossen sind und die beiden anderen Enden der Randspulen an eine Erdungsmasse elektrisch angeschlossen sind.

Die obenstehend beschriebene erfindungsgemäße Spulenkonfiguration bietet die Möglichkeit, die Mittenspule jedes Systems zum Verschieben des Objektivs in quer zu der optischen Achse liegenden Richtungen zu erregen und weiterhin die Randspulen jedes Systems zum längs der optischen Achse Verschieben des Objektivs zu erregen. Die gesamten Randspulen können gewünschtenfalls auch dazu verwendet werden, das Objektiv um quer zu der optischen Achse liegende Achsen zu kippen. Dies bedeutet, daß zum Fokussieren eines Lichtstrahles zu einem Lichtflecken in einer Informationsebene einer optischen Platte die Randspulen der Antriebsanordnung angesteuert werden müssen und daß zur radialen und tangentiellen Spurfolge des Lichtfleckens die Mittenspulen angesteuert werden müssen, ggf. zusammen mit einer selektiven Ansteuerung der Randspulen.

Die erfindungsgemäße Abtasteinheit bietet den Vorteil, daß bei Erregung der Spulen die axial sowie radial gerichteten magnetischen Kräfte, die von den Spulen auf den Magnetkörper ausgeübt werden, bei axialer Verschiebung des Objektivs über einen Abstand, der groß genug ist um ein Lichtbündel in der Informationsebene einer optischen Platte zu fokussieren und darin fokussiert zu halten, wenigstens nahezu konstant bleiben.

Aus der nicht vorveröffentlichten älteren europäischen Anmeldung EP-A 215 498 ist es bereits bekannt, daß die Segmentspulensysteme aus je zwei Randspulen, die sich im wesentlichen in dem Magnetfeld in der Nähe des axialen Endes eines Magnetkörpers befinden, sowie aus einer zwischen den Randspulen angeordneten Mittelspule bestehen.

Demgegenüber bietet die erfindungsgemäße Abtasteinheit den Voteil, daß die Anzahl Verstärker, die notwendig sind, um die von dem Positions- und Lagendetektionssystem herrührenden Fehlersignale entsprechend zu verstärken, damit eine einwandfreie Ansteuerung der Segmentspulen ohne Übersprecherscheinungen erreicht wird, nur zweidrittel der Anzahl vorhandener Segmentspulen beträgt. Mit nur einer Matrixschaltung, mindestens drei Systemen zu je mindestens drei Segmentspulen und mit einer nur beschränkten Anzahl Verstärker werden zum Verschieben des Objektivs zwecks der radialen und tangentiellen Spurfolge alle Segmentspulen benutzt, wobei die erforderlichen magnetischen Antriebskräfte in radialer und tangentieller Richtung über eine relativ große axiale Verschiebung des Objektivs weitgehend konstant bleiben.

Eine in fertigungstechnischer Hinsicht günstige Ausführungsform weist das Kennzeichen auf, daß die Segmentspulen jedes Systems dieselbe Wickelrichtung aufweisen.

Wenn alle Segmentspulen mit demselben Wickeldraht gebildet sind und dieselben Abmessungen aufweisen, wird die elektrische Impedanz der Mittenspule nur die Hälfte der elektrischen Impedanz der beiden Randspulen nur eines Systems zusammen sein. Dies bedeutet ber der obenstehend beschriebenen Konfiguration der Spulen, daß bei Ansteuerung die Stromstärke in der Mittenspule zweimal größer ist als in den Randspulen ein und desselben Systems. Dies kann in bestimmten Fällen erwünscht sein, z.B. wenn in der Mittenposition des Objektivs äußerst große Antriebskräfte in radialer und tangentieller Richtung notwendig sind. Es ist jedoch auch möglich durch Verlängerung der Mittenspule den Impedanzunterschied zwischen der Mittenspule und den Randspulen zu verringern. In diesem Zusammenhang weist eine andere bevorzugte Ausführungsform das Kennzeichen auf, daß von jedem Randspulensystem die Randspulen dieselbe Impedanz aufweisen und die Mittenspule eine Impedanz aufweist, die zweimal größer ist als die Impedanz einer der Randspulen. In dieser Ausführungsform verhalten sich die Segmentspulen eines Systems sich was die radial und tangentiell gerichteten Antriebskräfte als eine einzige Spule.

Ausführungsbeispiele der Erfindung sind in der Zeichnung dargestellt und werden im folgenden näher beschrieben. Es zeigen:

Fig. 1 eine schematische Darstellung eines Teils der erfindungsgemäßen Abtasteinheit,
Fig. 2 eine explodierte Ansicht einer Ausführungsform der Antriebsanordnung der erfindungsgemäßen Abtasteinheit,
Fig. 3 eine Draufsicht der in Fig. 2 dargestellten Antriebsanordnung,
Fig. 4 einen Schnitt gemäß der Linie IV-IV in Fig. 2 und
Fig. 5 eine Darstellung der Schaltungsanordnung der Segmentspulen der dargestellten Antriebsanordnung.

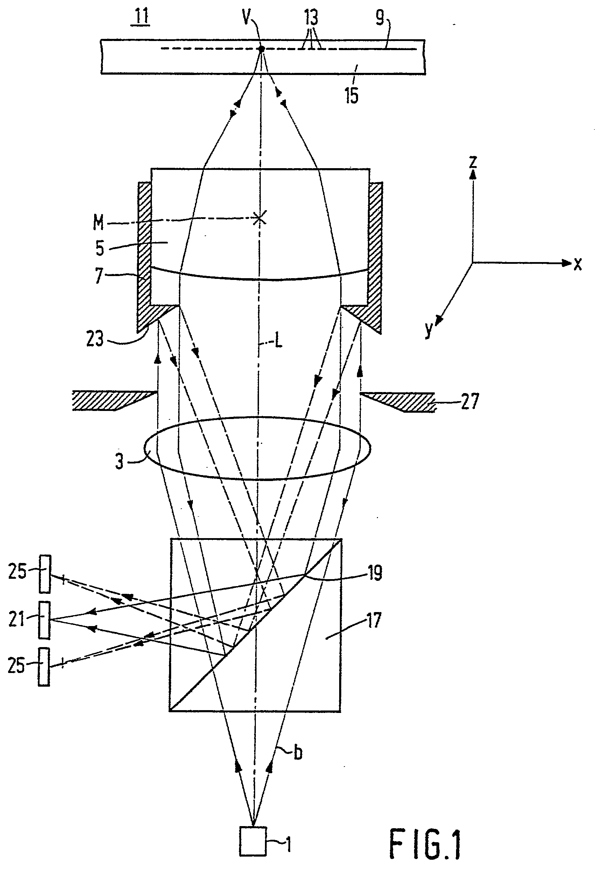

Die Abtasteinheit nach Fig. 1 weist eine Strahlungsquelle 1, z.B. einen Diodenlaser, einen Kollimator 3 und ein Objektiv 5 auf, das innerhalb einer Objektivhalterung angeordnet ist. Das Objektiv sowie der Kollimator können mehrere Linsenelemente aufweisen.

Das von der Strahlungsquelle gelieferte divergierende Auslesebündel b wird von dem Kollimator in ein paralles Bündel umgewandelt, das die Öffnung des Objektivs 5 auf einwandfreie Weise füllt. Das Objektiv fokussiert das Auslesebündel zu einem Beugungsbegrenzten Strahlungsflecken V mit einem Durchmesser von z.B. 1 μm in der Informationsebene 9 eines scheibenförmigen Aufzeichnungsträgers 11, von dem in Fig. 1 ein kleiner Teil in radialem Schnitt dargestellt ist. Die Information ist in konzentrischen Spuren 13 oder quasi-konzentrischen Spuren, die zusammen eine spiralförmige Spur bilden, gespeichert. Diese Information besteht aus eine Vielzahl optisch detektierbarer Informationsgebiete, zwischen denen jeweils Zwischengebiete vorgesehen sind. Vorzugsweise befindet sich die Informationsfläche 9 auf der Oberseite des Aufzeichnungsträgers, so daß das Auslesebündel durch das transparente Substrat 15 des Aufzeichnungsträgers hindurchgeht bevor es die Informationsfläche erreicht. Weiterhin ist die Informationsfläche vorzugsweise strahlungsreflektierend, so daß das Auslesebündel in Richtung der Strahlungsquelle reflektiert wird.

Beim Drehen des Aufzeichnungsträgers gegenüber der Abtasteinheit wird das von der Informationsfläche reflektierte Bündel entsprechend der Folge von Informationsgebieten und Zwischengebieten in einer auszulesenden Informationsspur in der Zeit moduliert. Zum Trennen des modulierten Bündels von dem von der Strahlungsquelle ausgestrahlten Bündel ist in dem Strahlungsweg ein Auskopplungselement 17 in Form eines halbdurchläßigen Spiegels oder eines ggf. polarisationsempfindlichen Prismas vorgesehen, dessen Trennfläche 19 wenigstens einen Teil der Strahlung zu einem strahlungsempfindlichen Informationsdetektor 21, in Form beispielsweise einer Photodiode, reflektiert. Der Informationsdetektor 21 verwandelt das modulierte Auslesebündel in ein elektrisches Signal, das auf bekannte Weise zu einem Signal verarbeitet wird, das dazu geeignet ist, abhängig von der Art der in dem Aufzeichnungsträger gespeicherten Information, sichtbar, hörbar oder auf eine andere Art und Weise verarbeitet werden kann. Die Art der Information und die Verarbeitung des Signals des Informationsdetektors bilden keinen Gegenstand der vorliegenden Erfindung und werden nicht näher beschrieben.

In dem rechten Teil der Fig. 1 ist ein XYZ-Achsensystem dargestellt, dessen Ursprung sich in Wirklichkeit in der Mitte M des Objektivs befindet, so daß die Z-Achse mit dem Hauptstrahl L zusammenfällt. Die Richtung dieser Achse kann auch als axiale Richtung bezeichnet werden. Die Kippung des Objektivs um die X-Achse kann als Kippwinkel $\alpha$ und die um die Y-Achse als Kippwinkel $\beta$ bezeichnet werden. Die X-Achse bzw. Y-Achse erstreckt sich z.B. parallel zu der radialen bzw. tangentiellen Richtung in der Informationsebene. Die sechs theoretisch möglichen unabhängigen Freiheitsgrade der Bewegung der Objektivhalterung 5 bestehen aus geradlinigen Bewegungen entsprechend den drei genannten Achsen sowie Drehungen um diese Achsen, wobei die Drehung um die Z-Achse in diesem Zusammenhang nicht von Bedeutung ist.

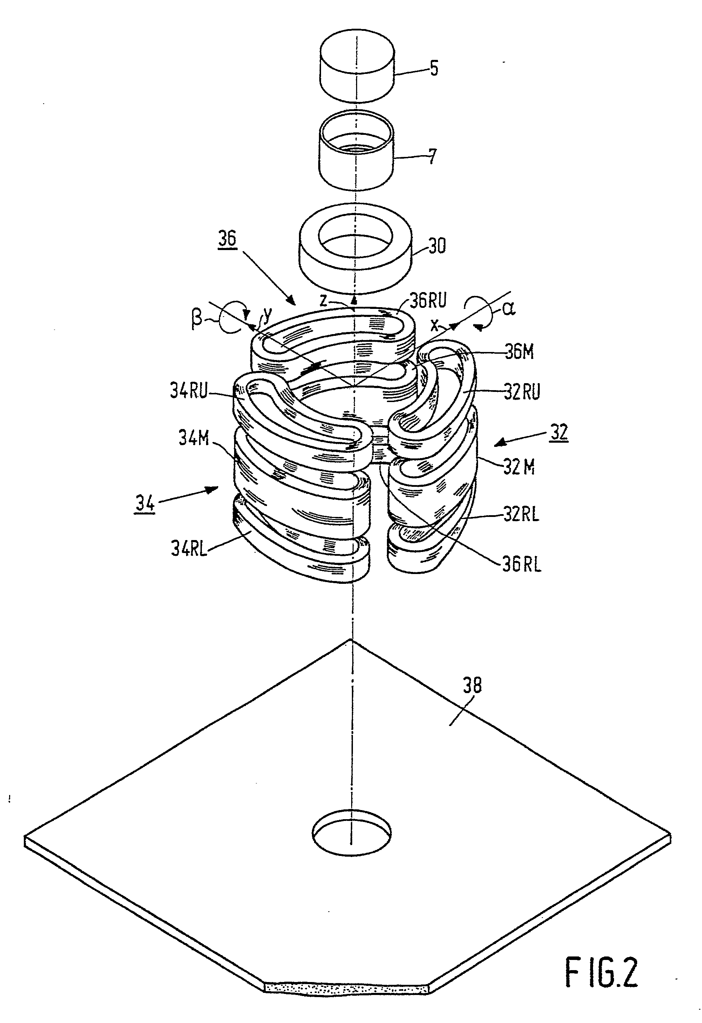

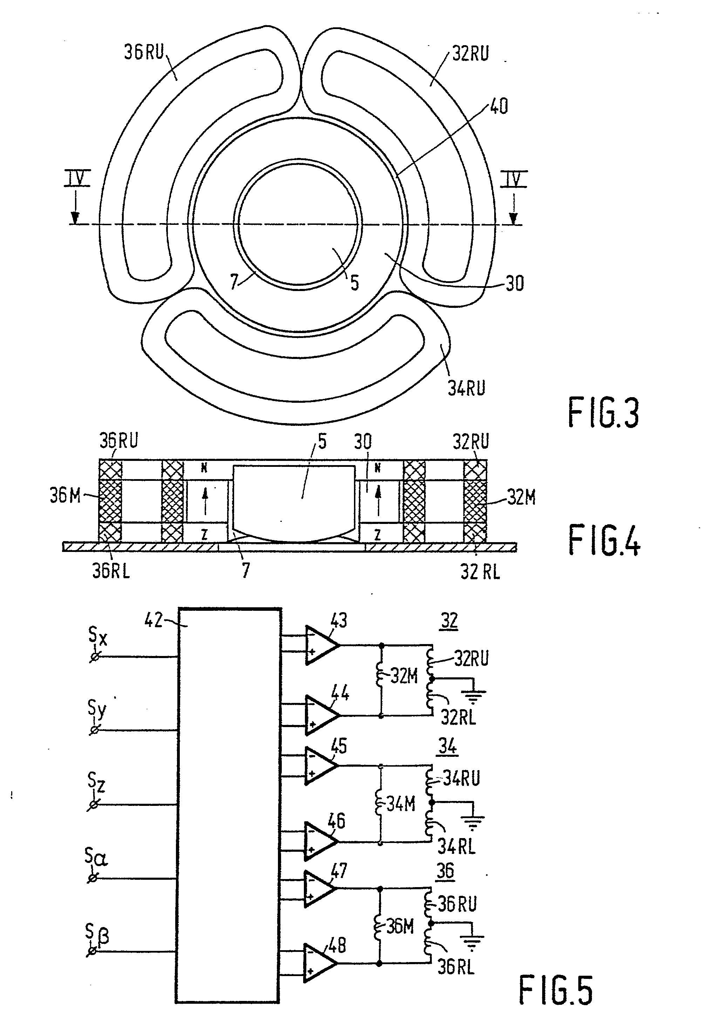

Damit die Objektivhalterung 5 die Bewegungen gegenüber der Abtasteinheit im wesentlichen derart durchführt, daß es keinen körperlichen Kontakt zwischen der Objektivhalterung 7 mit dem Objektiv 5 und den übrigen Elementen der Abtasteinheit gibt, ist das Objektiv in einer elektromagnetischen Antriebsanordnung aufgehängt, die anhand der Fig. 2, 3 und 4 näher beschrieben wird. Dabei ist ein Positions- und Lagendetektionssystem erforderlich, um Abweichungen zwischen der Mitte M des Objektivs und dem Hauptstrahl L des Bündels b längs einer X-Achse, in der Zeichenebene, längs einer Y-Achse, senkrecht zu der Zeichenebene, und längs einer Z-Achse, senkrecht zu den genannten Achsen, sowie um Kippungen der Objektivlinse um die X- und Y-Achse messen zu können, so daß die Positionsabweichungen und die Kippungen mit Hilfe eines Regelsystems ausgeglichen werden können.

Das Positions- und Lagendetektionssystem ist durch einen mit dem Objektiv ortsfest verbundenen ringförmigen Spiegel 23 gebildet, der kegelförmig ist, sowie durch ein strahlungsempfindliches Detektionssystem 25. Der ringförmige Spiegel 23 reflektiert denjenigen Teil des Strahlungsbündels b, der innerhalb der Blende 27 aber außerhalb der Pupille des Objektibs liegt zu dem Auskopplungselement 17, das seinerseits einen Teil der Strahlung zu dem Detektionssystem 25 reflektiert. Da das Detektionssystem keinen Gegenstand der vorliegenden Erfindung bildet, wird dieses System in diesem Zusammenhang nicht näher beschrieben. Eine eingehende Beschreibung eines Deketionssystems läßt sich in der bereits genannten niederländischen Patentanmeldung 8501665 finden. Außerdem sei noch auf die US Patentanschrift 4.425.043 hingewiesen, aus der ein Fokusfehlerdetektionssystem bekannt ist.

Die von dem Positions- und Lagendetektionssystem herrührenden Fehlersignale beziehen sich auf die Verschiebungen längs der X-, Y- und Z-Achse sowie auf die Kippungen um die X- und Y-Achse des Objektivs und werden in an dieser Stelle nicht näher genannten Vorgängen zu Regelsignalen Verarbeitet, die als Sx, Sy, Sz, S$\alpha$- und S$\beta$bezeichnet werden können.

Die Fig. 2, 3 und 4 zeigen eine elektromagnetische Antriebsanordnung der Abtasteinheit. Die Antriebsanordnung besteht im Grunde aus einem beweglich aufgehängten, an der Objektivhalterung 7 befestigten Magnetkörper30 und aus einer Anzahl um dieselben gegliederter ortsfester Spulen, die entsprechend mindestens drei Sätzen 32, 34 und 36 gegliedert sind. Der Magnetkörper 30 ist ring- oder hülsenförmig und besteht aus einem dauermagnetischen Material wie Neodymium-Eisen-Bor oder Samarium-Kobalt. Die Spulen in den jeweiligen Systemen befinden sich im wesentlichen in spezifischen Teilen des Magnetkraftfeldes des genannten Magnetkörpers, der axial magnetisiert ist. Damit das Objektiv 5 die bereits beschriebenen gewünschten Bewegungen ohne parasitäre Resonanz durchführen kann, ist das Objektiv innerhalb der Antriebsanordnung magnetisch gelagert, wobei es zwischen dem Magnetkörper 30 und den Spulen keinen körperlichen Kontakt gibt.

Der axial magnetisierte Magnetkörper 30 weist an den axialen Enden einen Südpol Z bzw. einen Nordpol N auf, wie dies in Fig. 4 dargestellt ist. Die um den Magnetkörper 30 herum angeordneten Systeme 32, 34, 36 der Segmentspulen sind auf einer Befestigungsplatte 38 befestigt. Die Systeme sind, in der Umfangsrichtung des Magnetkörpers 30 gesehen, nebeneinander angeordnet und bilden zusammen einen mehr oder weniger geschlossenen Mantel um dem Magnetkörper, wobei es zwischen den Gesamtsystem und dem Magnetkörper einen Luftspalt 40 gibt. Jedes der Systeme 32, 34 und 36 ist mit zwei Randspulen 32RU, 32RL; 34RU, 34RL bzw. 36RU, 36RL versehen, die sich in Gebieten befinden, in denen die Magnetfeldlinien des in der Mittenposition befindlichen Magnetkörpers 30 im wesentlichen radial gerichtet sind. Unter dem Ausdruck "Mittenposition" wird in diesem Zusammenhang diejenige Position verstanden in der der Magnetkörper sich wenigstens nahezu mitten zwischen den Randspulen befindet. Jedes der Systeme 32, 34 und 36 ist weiterhin mit einer Mittenspule 32M, 34M bzw. 36M versehen, die zwischen den Randspulen vorgesehen ist, und die sich in einem Teil des genannten Magnetfeldes befindet, wo die Feldlinien sich im wesentlichen axial erstrecken.

In diesem Ausführungsbeispiel sind die Segmentspulen aus ein und demselben Wickeldraht gebildet, wobei die Mittenspule eine zweimal größere Abmessung hat als die Randspulen. Die übrigen Abmessungen der Spulen entsprechen einander.

In Fig. 5 ist auf schematische Weise angegeben, wie die Segmentspulen der vorhandenen Systeme 32, 34 und 36 untereinander und mit der Matrixschaltung elektrisch verbunden sind. Der durch den Block 42 bezeichneten Matrixschaltung werden die bereits genannten Regelsignale Sx, Sy, Sz, Sα und Sβ zugeführt, die in der Matrixschaltung in geeignete Steuersignale miteiner geeigneten Polarität für die jeweiligen Systeme 32, 34 und 36 von Segmentspulen übersetzt werden. Die Matrixschaltung ist mittels sechs Verstärker 43 und 44, 45 und 46 sowie 47 und 48 mit den Systemen 32, 34 bzw. 36 elektrische gekoppelt, wobei jedes System zwischen zwei Verstärkern geschaltet ist. Die beiden Randspulen jedes Systems sind mit je einem Ende elektrische mit dem Ausgang eine Verstärkers und mit dem anderen Ende miteinander verbunden, wobei der Knotenpunkt an Erde gelegt ist. Die Mittenspulen sind mit den beiden Enden mit dem Ausgang der betreffenden Verstärker elektrisch verbunden. In diesem Beispiel weisen die Segmentspulen 32RU, 32RL, 32M, 34RU, 34RL, 34M, 36RU, 36RL und 36M, in derselben axialen Richtung gesehen, alle denselben Wickelsinn auf, wobei die Randspulen untereinander auch dieselbe Impedanz aufweisen.

Die genannte Matrixschaltung 42 ist derart ausgebildet, daß ein derselben zugeführtes Regelsignal Sx, Sy, Sz, Sα oder Sβ, entsprechend einem bestimmten Bewegungsfreiheitsgrad des Objektivs 5 den Verstärkern 43, 44, 45, 46, 47 und 48 zugeführt wird und zwar derart, daß der Strom durch die Segmentspulen 32RU, 32RL, 32M, 34RU, 34RL, 34M, 36RU, 36RL und 36M im wesentlichen eine Korrekturbewegung des Objektivs 5 entsprechend dem betreffenden Freiheitsgrad der Bewegung herbeiführt, ohne daß dadurch eine Verschiebung einiger Bedeutung des Objektivs entsprechend einem der übrigen Freiheitsgraden der Bewegung verursacht wird. Dies wird anhand der nachfolgenden Tabelle näher erläutert.

| | Sx | Sy | Sz | Sα | Sβ |
|---|---|---|---|---|---|
| 32RU | $-k_1.x$ | $+y$ | $+z$ | $+\alpha'$ | $-k_2.\beta'$ |
| 32RL | $+k_1.x$ | $-y$ | $+z$ | $+\alpha'$ | $-k_2.\beta'$ |
| 32M | $-k_1.k.x$ | $-k.y$ | 0 | 0 | 0 |
| 34RU | $+x$ | 0 | $+z$ | 0 | $+\beta'$ |
| 34RL | $-x$ | 0 | $+z$ | 0 | $+\beta'$ |
| 34M | $+k.x$ | 0 | 0 | 0 | 0 |
| 36RU | $-k_1.x$ | $-y$ | $+z$ | $-\alpha'$ | $-k_2.\beta'$ |
| 36RL | $+k_1.x$ | $+y$ | $+z$ | $-\alpha'$ | $-k_2.\beta'$ |
| 36M | $+k_1.k.x$ | $-k.y$ | 0 | 0 | 0 |

In der Tabelle ist eine Matrix dargestellt, in der qualitativ angegeben ist, durch welche Spulen mit welcher Phase Strom hindurchgeführt werden muß zum Erhalten einer bestimmten Verschiebung X, Y oder Z oder Kippung α oder β des Objektivs. Für die in der Matrix angegebenen Symbole x, y, z, α' und β' muß ein Proportionalitätsfaktor für die Signale Sx, Sy, Sz, Sα bzw. Sβ gedacht werden. Außerdem kann es noch andere Proportionalitätsfaktoren geben, wie die in der Tabelle angegebenen Faktoren k, $k_1$ und $k_2$. Dabei berücksichtigt der Faktor k das Verhältnis der Impedanz der Mittenspulen zu der Impedanz der Randspulen. So wird vorzugsweise k=1 sein, wenn die Impedanz der Mittenspule eines Systems von Segmentspulen zweimal größer ist als die Impedanz einer der Randspulen. Bei einer Impedanz der Mittenspule, die kleiner bzw. größer ist als die doppelte Impedanz der Randspule wird k > 1 bzw. k < 1 sein. Theoretisch und versuchsweise wurde festgestellt, daß die Faktoren $k_1$ und $k_2$, je vorzugsweise einen Wert gleich 1/2 aufweisen sollen, weil bei diesem Wert das Übersprechen minimal ist, in dem Sinne, daß beim Korrigieren des Objektivs in X- und β-Richtungen keine Verschiebungen in der Z-Richtung verursacht werden.

Wie aus der Matrix deutlich ersichtlich ist, sollen die Mittenspulen 32M, 34M und 36M nur für die geradlinigen Bewegungen in der X- und Y-Richtung des Objektivs erregt werden. Die in der Matrix angegebene Ansteuerung der Spulen wird mit der Anordnung und Schaltung der Spulen, wie diese in der bereits beschriebenen Fig. 5 angegeben sind, auf günstige Weise erreicht.

Aus der obenstehenden Tabelle läßt sich lesen, daß die Matrixschaltung den Eingängen der Verstärker 43 bis einschließlich 48 die nachfolgenden Steuersignale zuführt:

Verstärker 43: $-k_1.x'.Sx +y'.Sy +z'.Sz +\alpha''.S\alpha -k_2.\beta''.S\beta$

Verstärker 44: $k_1.x'\ Sx -y'.Sy +z'.Sz + \alpha''.S\alpha -k_2.\beta''.S\beta$

Verstärker 45: $x'.Sx +z'.Sz +\beta''.S\beta$

Verstärker 46: $-x'.Sx +z'.Sz +\beta''.S\beta$

Verstärker 47: $-k_1.x'.Sx -y'.Sy +z'.Sz - \alpha''.S\alpha - k_2.\beta''.S\beta$

Verstärker 48: $k_1.x'.Sx +y'.Sy +z'.Sz - \alpha''.S\alpha -k_2.\beta''.S\beta$

Für die Symbole $x'$, $y'$, $z'$, $\alpha''$ und $\beta''$ muß ein Proportionalitätsfaktor für die Regelsignale Sx, Sy, Sz, S$\alpha$ und S$\beta$ gelesen werden.

## Patentansprüche

1. Optische Abtasteinheit zum Steuern und Ausrichten eines Strahlungsbündels auf Aufzeichnungsspuren einer abzutastenden Oberfläche eines Informationsträgers (11), wobei diese Abtasteinheit ein Objektiv (5), ein Positions- und Lagendetektionssystem zum Detektieren der Positionen des Objektivs und eine elektromagnetische Antriebsanordnung zum Korrigieren der Position des Objektivs gegenüber dem Informationsträger abhängig von den von dem Positions- und Lagendetektionssystem gelieferten elektrischen Fehlersignalen aufweist, wobei die Antriebsanordnung eine bewegliche Objektivhalterung (7) mit einem zylinderförmigen axial magnetisierten Magnetkörper (30) aufweist, der an den axialen Enden mit Magnetpolen (N; Z) versehen ist und wobei die Antriebsanordnung weiterhin mindestens drei in dem Magnetfeld des Magnetkörpers befindliche Segmentspulensysteme (32; 34; 36) aufweist, wobei diese Systeme, in der Umfangsrichtung des Magnetkörpers gesehen, nebeneinander angeordnet sind und über einen Luftspalt mit dem Magnetkörper magnetisch zusammenarbeiten, dadurch gekennzeichnet, daß die Segmentspulensysteme aus je zwei Randspulen (32RU, 32RL; 34RU; 34RL; 36RU; 36RL), dis sich im wesentlichen in dem Magnetfeld in der Nähe eines der axialen Enden des genannten Magnetkörpers befinden, sowie aus mindestens einer zwischen den Randspulen angeordneten Mittenspule (32M; 34M; 36M) bestehen, wobei jedes Segmentspulensystem nur über zwei Verstärker (43, 44; 45, 46; 47, 48) mit einer Matrixschaltung (42) verbunden ist, wobei von jedem Segmentspulensystem (32; 34; 36) eines der Enden einer der Randspulen (32RU; 34RU; 36RU) sowie eines der Enden der Mittenspule (32M; 34M; 36M) an den Ausgang eines ersten Verstärkers (43; 45; 47) elektrisch angeschlossen sind, eines der Enden der anderen Randspule (33RL; 34RL; 36RL) sowie das andere Ende der Mittenspule (32M; 34M; 36M) an den Ausgang eines zweiten Verstärkers (44; 46; 48) elektrisch angeschlossen sind und die beiden anderen Enden der Randspulen (32RU, 32RL; 34RU, 34RL; 36RU, 36RL) an eine Erdungsmasse elektrisch angeschlossen sind.

2. Optische Abtasteinheit nach Anspruch 1, dadurch gekennzeichnet, daß die Segmentspulen jedes Systems (32; 34; 36) dieselbe Wickelrichtung aufweisen.

3. Optische Abtasteinheit nach Anspruch 2, dadurch gekennzeichnet, daß von jedem Segmentspulensystem (32; 34; 36) die Randspulen eine einander entsprechende elektrische Impedanz aufweisen und die Mittenspule eine Impedanz hat, die zweimal größer ist als die einer der Randspulen.

4. Optische Abtasteinheit nach Anspruch 2, dadurch gekennzeichnet, daß die Matrixschaltung (42) ein derselben zugeführtes Regelsignal betreffs eines bestimmten Freiheitsgrades der Bewegung des Objektivs (5) zu den Verstärkern (43, 44; 45, 46; 47, 48) weiterleitet, und zwar derart, daß der Strom durch die Segmentspulen im wesentlichen eine Korrekturbewegung entsprechend dem betreffenden Freiheitsgrad des Objektivs verursacht, ohne daß dabei eine nennenswerte Verschiebung des Objektivs nach einem der übrigen Freiheitsgrade der Bewegung verursacht wird.

## Claims

1. An optical scanning unit for controlling and directing a radiation beam towards recording tracks of a surface to be scanned of an information carrier (11), which scanning unit comprises an objective (5), a translational-position and angular-position detection system for detecting the positions of the objective and an electro-magnetic actuating means for correcting the translational and the angular position of the objective relative to the information carrier depending on electric error signals supplied by the translational-position and angular-position detection system, the actuating means comprising a movable objective holder (7) which comprises a cylindrical axially magnetized magnet body (30) which at its axial ends is provided with magnet poles (N; Z) and the actuating means further comprising at least three sets (32; 34; 36) of segment coils disposed in the magnet field of the magnet body, which sets are arranged adjacent one another viewed in the circumferential direction of the magnet body and cooperate magnetically with the magnet body <u>via</u> an air gap, characterized in that the sets of segment coils each comprise two peripheral coils (32RU, 32RL; 34RU, 34RL; 36RU, 36RL) which are each situated substantially within the magnet field near one of the axial ends of said magnet body, and at least one central coil (32M; 34M; 36M)

6

EP 0 233 380 B1

arranged between the peripheral coils, and each set of segment coils is electrically connected to a matrix circuit (42) via only two amplifiers (43, 44; 45, 46; 47, 48), each set (32; 34; 36) of segment coils having
- one of the terminals of one of the peripheral coils (32RU; 34RU; 36RU) and one of the terminals of the central coil (32M; 34M; 36M) electrically connected to the output of a first amplifier (43; 45; 47), having
- one of the terminals of the other peripheral coil (32RL; 34RL; 36RL) and the other terminal of the central coil (32M; 34M; 36M) electrically connected to the output of a second amplifier (44; 46; 48), and having
- the two other terminals of the peripheral coils (32RU, 32RL; 34RU, 34RL; 36RU, 36RL) electrically connected to earth.

2. An optical scanning unit as claimed in claim 1, characterized in that the segment coils of each set (32; 34; 36) have the same winding direction.

3. An optical scanning unit as claimed in claim 2 or 3, characterized in that of each set (32; 34; 36) of segment coils the peripheral coils have equal electrical impedances and the central coil has an impedance which is twice as large as the impedance of one of the peripheral coils.

4. An optical scanning unit as claimed in claim 2, characterized in that the matrix circuit (42) transfers a control signal applied to said matrix circuit and corresponding to a specific degree of freedom of the objective (5) to the amplifiers (43, 44; 45, 46; 47, 48) in such a way that the currents through the segment coils mainly result in a correction movement of the objective in accordance with the relevant degree of freedom without any significant displacement of the objective in accordance with any of the other degrees of freedom.

**Revendications**

1. Unité de balayage optique destinée à commander et à orienter un faisceau de rayons sur des pistes d'enregistrement d'une surface à balayer d'un support d'information (11), cette unité de balayage comportant un objectif (5), un système de détection de position et d'orientation afin de détecter les positions de l'objectif, ainsi qu'un dispositif d'entraînement électromagnétique servant à corriger la position de l'objectif par rapport au support d'information en fonction de signaux d'erreurs électriques fournis par le système de détection de position et d'orientation, le dispositif d'entraînement comprenant un porte-objectif (7) mobile présentant un corps magnétique (30) cylindrique magnétisé dans le sens axial, qui est pourvu de pôles magnétiques (N; Z) aux extrémités axiales et le dispositif d'entraînement comportant, en outre, au moins trois systèmes de bobines segmentaires (32; 34; 36) situés dans le champ magnétique du corps magnétique, lesquels systèmes sont disposés côte à côte, vu dans le sens périphérique du corps magnétique, et agissent en coopération magnétique avec le corps magnétique par l'intermédiaire d'un entrefer, caractérisée en ce que les systèmes de bobines segmentaires sont constitués chacun de deux bobines marginales (32RU, 32RL; 34RU, 34RL; 36RU, 36RL) qui se trouvent chacune en substance dans le champ magnétique à proximité de l'une des extrémités axiales dudit corps magnétique, ainsi que d'au moins une bobine médiane (32M; 34M; 36M) disposée entre les bobines marginales, chacun des systèmes de bobines segmentaires n'étant connecté que par l'intermédiaire de deux amplificateurs (43, 44; 45, 46; 47, 48) à un circuit matriciel (42), tandis que dans chaque système de bobines segmentaires (32; 34; 36), l'une des extrémités de l'une des bobines marginales (32RU; 34RU; 36RU), ainsi que l'une des extrémités de la bobine médiane (32M; 34M; 36M) sont connectées électriquement à la sortie d'un premier amplificateur (43; 45; 47) et que l'une des extrémités de l'autre bobine marginale (32RL; 34RL; 36RL) ainsi que l'autre extrémité de la bobine médiane (32M; 34M; 36M) sont connectées électriquement à la sortie d'un second amplificateur (44; 46; 48), les deux autres extrémités des bobines marginales (32RU, 32RL; 34RU, 34RL; 36RU, 36RL) étant connectées électriquement à une masse de mise à la terre.

2. Unité de balayage optique suivant la revendication 1, caractérisée en ce que les bobines segmentaires de chaque système (32; 34; 36) présentent le même sens de bobinage.

3. Unité de balayage optique suivant la revendication 2, caractérisée en ce que dans chaque système de bobines segmentaires (32; 34; 36), les bobines marginales présentent une impédance électrique mutuellement correspondante et la bobine médiane présente une impédance qui vaut le double de celle d'une des bobines marginales.

4. Unité de balayage optique suivant la revendication 2, caractérisée en ce que le circuit matriciel (42) transmet un signal de réglage concernant un certain degré de liberté de mouvement de l'objectif (5), qui lui est appliqué, aux amplificateurs (43, 44; 45, 46; 47, 48), et ce d'une manière telle que le courant passant par les bobines segmentaires provoque en substance un mouvement de correction suivant le degré de liberté en question de l'objectif sans entraîner ainsi un déplacement notable de cet objectif suivant l'un des autres degrés de liberté du mouvement.

FIG.1

FIG.2

FIG.3

FIG.4

FIG.5